# EUROPEAN PATENT APPLICATION

(11) **EP 4 734 233 A1**
(43) Date of publication of application: **29.04.2026**
(21) Application number: 25748988.0
(22) Date of filing: 24.01.2025
(51) Int. Cl.: H01M 10/6568, H01M 10/613, H01M 10/617, H01M 50/367

(54) **BATTERY PACK**

(30) Priority: 30.01.2024 KR 20240014130
(71) Applicant: LG Energy Solution, Ltd., Seoul 07335 (KR)
(72) Inventor: HAN, Nyeon Gu, Daejeon 34122 (KR)
(74) Representative: Hoffmann Eitle
(86) International application number: PCT/KR2025/001385
(87) International publication number: WO 2025/165084

(57) **Abstract**

The technical idea of the present disclosure provides a battery pack. The battery pack includes: a base plate including a lower cooling channel; a cell assembly disposed on the base plate, and including a plurality of battery cells; a top plate disposed on the cell assembly, and having an upper cooling channel; a front end frame coupled to the top plate, and having a first side cooling channel communicating with the upper cooling channel; a rear end frame extending from the base plate to the top plate, and having a second side cooling channel communicating with the upper cooling channel and the lower cooling channel; an inlet pipe coupled to the front end frame, having an inlet channel communicating with the first side cooling channel and configured to deliver externally provided cooling fluid to the first side cooling channel; and an outlet pipe coupled to the base plate, and having an outlet channel communicating with the lower cooling channel.

## Description

### [Technical Field]

The present disclosure relates to a battery pack.

This application claims the benefit of Korean Patent Application No. 10-2024-0014130, filed on January 30, 2024, the disclosure of which is incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. In recent years, the primary use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

As secondary batteries are used in mobility, there is a growing need for their safety. In the event of an accident, such as a fire, in a secondary battery used in mobility, the driver's life can be endangered, so research into technologies to improve the safety of secondary batteries is essential.

### [Summary]

### [Technical Problem]

The technical challenge of the present disclosure is to provide a battery pack.

### [Technical Solution]

To address the above challenges, the technical ideas of the present disclosure provides a battery pack including: a base plate comprising a lower cooling channel; a cell assembly disposed on the base plate, and comprising a plurality of battery cells; a top plate disposed on the cell assembly, and having an upper cooling channel; a front end frame coupled to the top plate, and having a first side cooling channel communicating with the upper cooling channel; a rear end frame extending from the base plate to the top plate and having a second side cooling channel communicating with the upper cooling channel and the lower cooling channel; an inlet pipe coupled to the front end frame, and having an inlet channel communicating with the first side cooling channel and configured to deliver externally provided cooling fluid to the first side cooling channel; and an outlet pipe coupled to the base plate, and having an outlet channel communicating with the lower cooling channel.

In exemplary embodiments, the inlet channel, the first side cooling channel, the upper cooling channel, the second side cooling channel, the lower cooling channel, and the outlet channel are in sequential communication.

In exemplary embodiments, the first side cooling channel includes: a common channel communicating with the inlet channel; and a plurality of first vertical channels, and the upper cooling channel includes a plurality of sub-upper channels spaced apart from each other, and each of the plurality of first vertical channels extends from a corresponding sub-upper channel among the plurality of sub-upper channels to the common channel.

In exemplary embodiments, the second side cooling channel includes a plurality of second vertical channels spaced apart from each other, and each of the plurality of second vertical channels extends from a corresponding sub-upper channel among the plurality of sub-upper channels to the lower cooling channel.

In exemplary embodiments, the lower cooling channel includes a plurality of sub-lower channels spaced apart from each other, and each of the plurality of second vertical channels extends from a corresponding sub-upper channel among the plurality of sub-upper channels to a corresponding sub-lower channel among the plurality of sub-lower channels.

In exemplary embodiments, each of the plurality of sub-upper channels extends in a first direction, each of the plurality of sub-lower channels extends in the first direction, and the plurality of second vertical channels extend in a vertical direction.

In exemplary embodiments, the top plate includes a first plug inserted into the first side cooling channel and having an internal channel.

In exemplary embodiments, the top plate includes a second plug inserted into the second side cooling channel and having an internal channel.

In exemplary embodiments, the rear end frame includes a third plug inserted into the lower cooling channel and having an internal channel.

In exemplary embodiments, the top plate includes a plurality of segments spaced apart from each other with a venting gap interposed therebetween, and the venting gap vertically overlaps with the cell assembly.

In exemplary embodiments, the plurality of battery cells is stacked in a first direction, the plurality of battery cells each extends in a second direction perpendicular to the first direction, and each of the plurality of battery cells includes: a center part vertically overlapping with the venting gap; and a pair of outer parts vertically overlapping with the top plate, and spaced apart in the second direction with the center part interposed therebetween.

In exemplary embodiments, the battery pack further includes: a perimeter wall extending along a perimeter of the base plate and surrounding the cell assembly; and a pack cover coupled onto the perimeter wall to cover the cell assembly and the top plate, wherein the pack cover is spaced apart from the top plate with a venting space interposed therebetween.

In exemplary embodiments, the battery pack includes: a perimeter wall extending along a perimeter of the base plate, and surrounding the cell assembly; and a pack cover coupled to the perimeter wall to cover the cell assembly and the top plate, wherein the inlet pipe penetrates the perimeter wall.

In exemplary embodiments, the upper cooling channel includes a plurality of sub-upper channels spaced apart from each other, the lower cooling channel comprises a plurality of sub-lower channels spaced apart from each other, the first side cooling channel comprises a plurality of first vertical channels and a common channel communicating with the inlet channel, each of the plurality of first vertical channels connecting a corresponding sub-upper channel among the plurality of sub-upper channels to the common channel, the second side cooling channel comprises a plurality of second vertical channels, each of the plurality of second vertical channels connecting a corresponding sub-upper channel among the plurality of sub-upper channels to a corresponding sub-lower channel among the plurality of sub-lower channels, the top plate comprises a plurality of first plugs inserted into the plurality of first vertical channels and a plurality of second plugs inserted into the plurality of second vertical channels, and the rear end frame comprises a plurality of third plugs inserted into the plurality of sub-lower channels.

In exemplary embodiments, the battery pack further comprises: a perimeter wall extending along a perimeter of the base plate, and surrounding the cell assembly; and a pack cover coupled onto the perimeter wall to cover the cell assembly and the top plate, and spaced apart from the top plate with a venting space interposed therebetween, wherein the inlet pipe penetrates the perimeter wall, the top plate comprises a plurality of segments spaced apart from each other by with a venting gap interposed therebetween, wherein the venting gap is in communication with the venting space.

### [Advantageous Effects]

According to an exemplary embodiment of the present disclosure, a battery pack includes a front end frame with a first side cooling channel, a top plate with an upper cooling channel, a rear end frame with a second side cooling channel, and a base plate with a lower cooling channel, which enables multi-sided cooling of the battery cells, thereby improving the cooling performance of the battery cells. Since the heat generation of the battery cells can be effectively controlled, the safety of the battery pack can be improved.

In a battery pack according to exemplary embodiments of the present disclosure, cooling fluid circulates within the battery pack through separate cooling channels, which can reduce differences in cooling fluid flow rates between regions, and can result in more uniform cooling of the battery cells.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a perspective view illustrating a battery pack according to exemplary embodiments of the present disclosure.
FIG. 2 is a cross-sectional view of a battery pack according to lines II-II' of FIG. 1.
FIG. 3 is a cross-sectional view of a battery pack according to the lines III-III' of FIG. 1.
FIG. 4 is a cross-sectional view of a battery pack according to lines IV-IV' of FIG. 1.
FIG. 5 is a cross-sectional view illustrating a portion of a battery pack according to exemplary embodiments of the present disclosure.
FIG. 6 is a cross-sectional view illustrating a portion of a battery pack according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

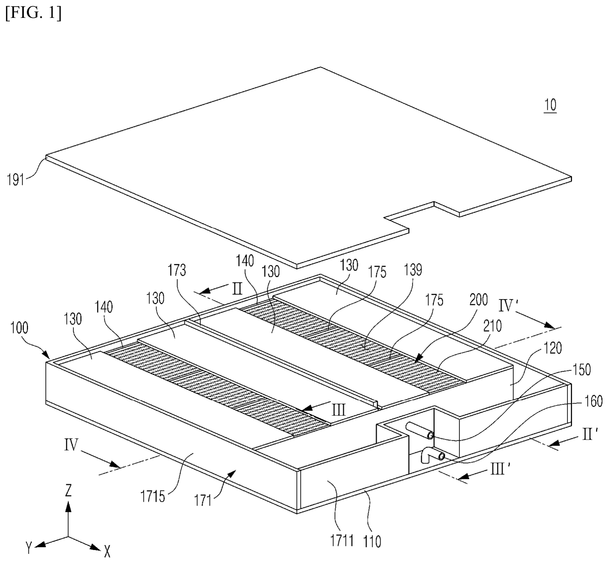

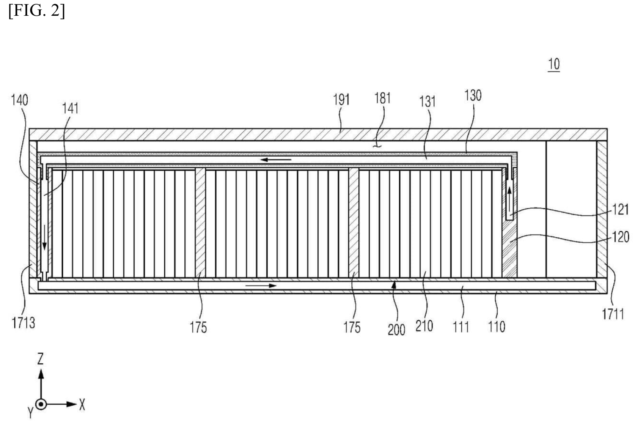

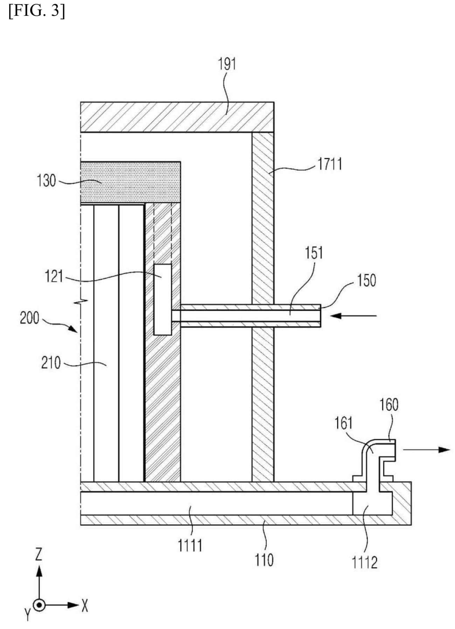

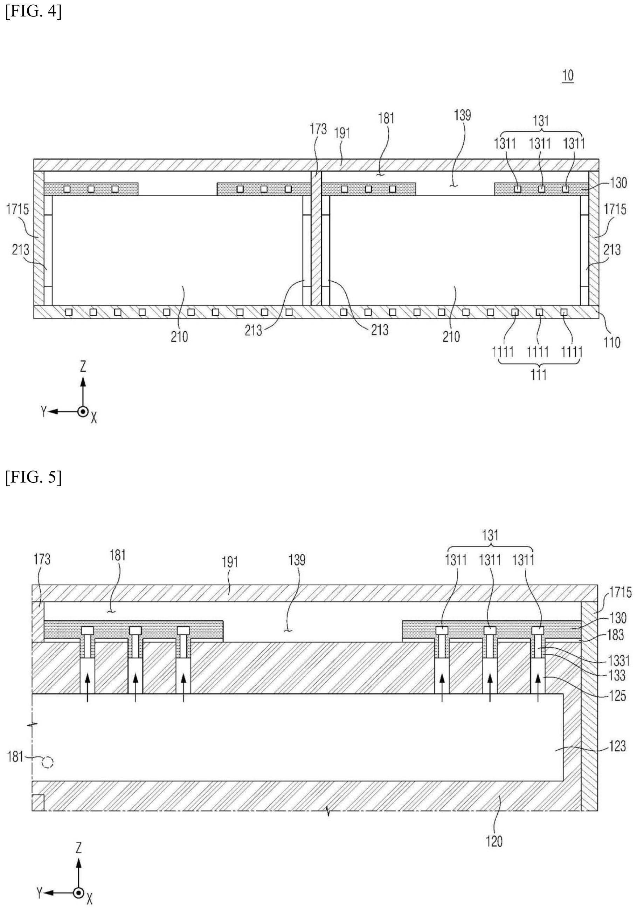

FIG. 1 is a perspective view illustrating a battery pack 10 according to exemplary embodiments of the present disclosure. FIG. 2 is a cross-sectional view of the battery pack 10 according to lines II-II' of FIG. 1. FIG. 3 is a cross-sectional view of the battery pack 10 according to lines III-III' of FIG. 1. FIG. 4 is a cross-sectional view of the battery pack 10 according to lines IV-IV' of FIG. 1.

Referring to FIGS. 1 through 4, a battery pack 10 may include a pack housing 100 and a cell assembly 200.

The battery pack 10 may include one or more cell assemblies 200 mounted in the pack housing 100. In exemplary embodiments, the battery pack 10 may include a plurality of cell assemblies 200 arranged in a first horizontal direction (e.g., X direction) and a second horizontal direction (e.g., Y direction) within the pack housing 100.

The cell assembly 200 may include a plurality of battery cells 210. The individual battery cells 210 are the basic unit of a lithium-ion battery, i.e., a secondary battery. The individual battery cells 210 may include electrode assemblies, electrolyte, and a cell case. The electrode assembly embedded in the cell case may include a positive electrode, a negative electrode, and a separator interposed between the positive electrode and the negative electrode. The electrode assembly may be one of a jelly-roll type and a stack-type, depending on the form of assembly. A jelly-roll type electrode assembly may include a winding structure of a positive electrode, a negative electrode, and a separator interposed between them. A stack-type electrode assembly may include a plurality of positive electrodes and a plurality of negative electrodes stacked in sequence, and a plurality of separators interposed therebetween. The positive electrodes may include a positive electrode current collector and a positive electrode active material. The negative electrodes may include a negative electrode current collector and a negative electrode active material.

The plurality of battery cells 210 may be connected in series and/or parallel. In one example, the plurality of battery cells 210 may be connected in series with each other. In one example, the plurality of battery cells 210 may be connected in parallel to each other. In one example, when defining a set of two or more battery cells 210 connected in parallel to each other as a bank, one bank of two or more battery cells 210 connected in parallel to each other and another bank of two or more battery cells 210 connected in series with each other may be connected in parallel to each other.

The individual battery cells 210 may correspond to pouch-type battery cells, cylindrical battery cells, or prismatic battery cells. The electrode assembly of a pouch-type battery cell is embedded in a pouch case including an aluminum laminated sheet. The electrode assembly of a cylindrical battery cell is embedded in a cylindrical metal can. The electrode assembly of the prismatic battery cell is embedded in a prismatic metal can.

In exemplary embodiments, the cell assembly 200 may include a plurality of battery cells 210 stacked on top of each other in a first horizontal direction (e.g., the X direction). In the cell assembly 200, adjacent battery cells 210 of the plurality of battery cells 210 may be fixed to each other via an adhesive member, such as adhesive tape. The plurality of battery cells 210 may each correspond to a pouch-type battery cell having a length along a second horizontal direction (e.g., Y direction) greater than a length along a first horizontal direction (e.g., X direction). The individual battery cells 210 may extend in the second horizontal direction (e.g., Y direction), and at least one of the two ends along the second horizontal direction (e.g., Y-direction) of the individual battery cells 210 may be provided with electrode leads 213. The electrode leads 213 of neighboring battery cells 210 may be physically coupled.

When viewed in a plane, the cell assembly 200 may have a rectangular shape. The cell assembly 200 may include an upper surface and a lower surface that are opposed in a vertical direction (e.g., Z direction), a first side and a second side that are opposed to each other in a first horizontal direction (e.g., X direction), and a third side and a fourth side that are opposed to each other in a second horizontal direction (e.g., Y direction). An upper surface of the cell assembly 200 may include upper surfaces of the plurality of battery cells 210, and a bottom surface of the cell assembly 200 may include bottom surfaces of the plurality of battery cells 210.

The pack housing 100 may provide an accommodation space for accommodating the cell assembly 200. The pack housing 100 may include a base plate 110, a perimeter wall 171, a first separation wall 173, a second separation wall 175, a top plate 130, a front end frame 120, a rear end frame 140, an inlet pipe 150, an outlet pipe 160, and a pack cover 191.

The base plate 110 may support the cell assembly 200. The base plate 110 may have a flat plate shape extending in a first horizontal direction (e.g., X direction) and a second horizontal direction (e.g., Y direction). When viewed in plan, the base plate 110 may have a roughly square flat plate shape.

The base plate 110 may include a lower cooling channel 111 configured to flow a cooling fluid. The lower cooling channel 111 may extend in a first horizontal direction (e.g., the X direction). The cooling fluid may include a coolant and/or a refrigerant.

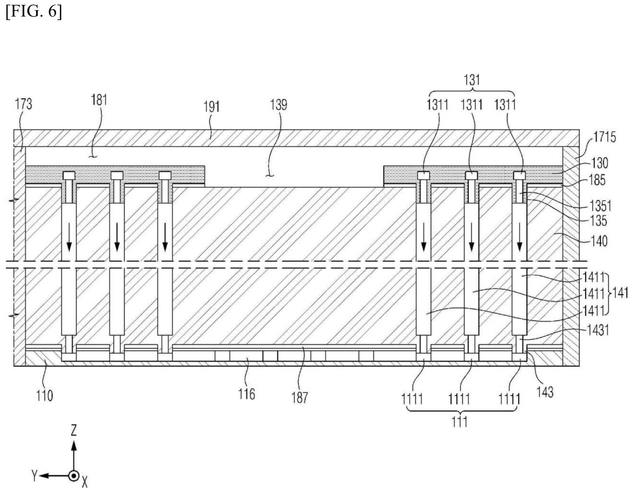

In exemplary embodiments, the lower cooling channel 111 may include a plurality of sub-lower channels 1111 spaced apart from each other. The plurality of sub-lower channels 1111 may be spaced apart from each other in a second horizontal direction (e.g., Y direction), and each sub-lower channel 1111 may extend in a first horizontal direction (e.g., X direction). The plurality of sub-lower channels 1111 may merge at a merge channel 1112 at a front end part of the base plate 110, and the merge channel 1112 may be communicating with an outlet channel 161 of the outlet pipe 160 described later. Additionally, a rear end part of the base plate 110 may be provided with a horizontal connecting channel (116 in FIG. 6) extending in a second horizontal direction (e.g., Y direction) to connect a plurality of sub-lower channels 1111.

In exemplary embodiments, a thermally conductive adhesive layer may be interposed between the bottom surface of the cell assembly 200 and the base plate 110. The cell assembly 200 may be thermally and physically coupled to the base plate 110 by the thermally conductive adhesive layer. For example, the thermally conductive adhesive layer may include a thermal resin and/or a thermal interface material.

The perimeter wall 171 may be disposed on the base plate 110, and may constitute the exterior of the pack housing 100. The perimeter wall 171 may extend along the perimeter of the base plate 110 and surround a plurality of cell assemblies 200 mounted on the base plate 110. The base plate 110 and the perimeter wall 171 may together define an accommodation space of the pack housing 100. The perimeter wall 171 may include a front wall 1711 and a rear wall 1713 that are opposed in a first horizontal direction (e.g., X direction), and a pair of side walls 1715 that are opposed in a second horizontal direction (e.g., Y direction). The front wall 1711 of the perimeter wall 171 may constitute a front surface of the pack housing 100, and the rear wall 1713 of the perimeter wall 171 may constitute a rear surface of the pack housing 100.

The first separation wall 173 and the second separation wall 175 are disposed on the base plate 110 and can compartmentalize or separate the internal space of the pack housing 100 into a plurality of spaces. In each of the plurality of spaces defined by the first separation wall 173 and the second separation wall 175, a cell assembly 200 may be disposed. The first separation wall 173 may extend in a first horizontal direction (e.g., the X direction). Some of the cell assemblies 200 of the plurality of cell assemblies 200 may be spaced apart in a second horizontal direction (e.g., Y direction) with the first separation wall 173 interposed therebetween. The second separation wall 175 may extend in the second horizontal direction (e.g., Y direction). Some of the cell assemblies 200 of the plurality of cell assemblies 200 may be spaced apart in a first horizontal direction (e.g., X direction) with the second separation wall 175 interposed therebetween.

The top plate 130 may be disposed on the cell assembly 200. The top plate 130 may have a flat plate shape extending in a first horizontal direction (e.g., X direction) and a second horizontal direction (e.g., Y direction). The top plate 130 may extend in the first horizontal direction (e.g., X direction) from the front end frame 120 to the rear end frame 140, and may face the upper surfaces of the cell assemblies 200 arranged in the first horizontal direction (e.g., X direction).

The top plate 130 may include an upper cooling channel 131 configured to allow cooling fluid to flow. The upper cooling channel 131 may extend in a first horizontal direction (e.g., X direction).

In exemplary embodiments, the upper cooling channel 131 may include a plurality of sub-upper channels 1311 spaced apart from each other. The plurality of sub-upper channels 1311 may be spaced apart from each other in a second horizontal direction (e.g., Y direction), and each sub-upper channel 1311 may extend in a first horizontal direction (e.g., X direction).

In exemplary embodiments, a thermally conductive adhesive layer may be interposed between the upper surface of the cell assembly 200 and the top plate 130. The cell assembly 200 may be thermally and physically coupled to the top plate 130 by the thermally conductive adhesive layer. For example, the thermally conductive adhesive layer may include a thermal resin and/or a thermal interface material.

The front end frame 120 may extend in a vertical direction (e.g., a Z direction) between the base plate 110 and the top plate 130, and may extend in a second horizontal direction (e.g., a Y direction) between a pair of side walls 1715 along a surface of the base plate 110. An upper part of the front end frame 120 may be coupled to a front end part of the top plate 130, and a lower part of the front end frame 120 may be coupled to the base plate 110. In exemplary embodiments, the front end frame 120 may be fastened to the top plate 130 via bolts. If desired, the bolts can be removed to separate the top plate 130 from the front end frame 120. The front end frame 120 faces the front wall 1711 of the perimeter wall 171 and may be disposed on one side of the cell assembly 200 that is the outermost side in a first horizontal direction (e.g., X direction) of the plurality of cell assemblies 200.

The front end frame 120 may include a first side cooling channel 121 configured for cooling fluid to flow through. The first side cooling channel 121 may extend in a vertical direction (e.g., the Z direction). The first side cooling channel 121 may be in communication with an upper cooling channel 131 of the top plate 130.

The rear end frame 140 may extend in a vertical direction (e.g., Z direction) between the base plate 110 and the top plate 130, and may extend in a second horizontal direction (e.g., Y direction) along a surface of the base plate 110. An upper part of the rear end frame 140 may be coupled to the rear end part of the top plate 130, and a lower part of the rear end frame 140 may be coupled to the base plate 110. In exemplary embodiments, the rear end frame 140 may be fastened to the top plate 130 via bolts. If desired, the bolts can be removed to separate the top plate 130 from the rear end frame 140. The rear end frame 140 faces the rear wall 1713 of the perimeter wall 171 and may be disposed on one side of the cell assembly 200 that is the outermost side in a first horizontal direction (e.g., the X direction) of the plurality of cell assemblies 200. The rear end frame 140 may be spaced apart from the front end frame 120 in a first horizontal direction (e.g., X direction) with the cell assemblies 200 interposed therebetween.

The rear end frame 140 may include a second side cooling channel 141 configured to flow cooling fluid. The second side cooling channel 141 may extend in a vertical direction (e.g., Z direction) from an upper surface of the rear end frame 140 to a lower surface. The second side cooling channel 141 may be coupled to an upper cooling channel 131 of the top plate 130 and a lower cooling channel 111 of the base plate 110. The upper cooling channel 131 of the top plate 130 may be connected to the lower cooling channel 111 of the base plate 110 via the second side cooling channel 141.

The inlet pipe 150 may be coupled to the front end frame 120 and may be configured to receive cooling fluid provided from an external cooling fluid source. The inlet pipe 150 may have an inlet channel 151 that communicates with the first side cooling channel 121 of the front end frame 120. The inlet pipe 150 may be configured to deliver externally provided cooling fluid to the first side cooling channel 121 of the front end frame 120. In exemplary embodiments, the inlet pipe 150 may penetrate the perimeter wall 171 and may be coupled to the front end frame 120 so that it is in fluid communication with the front end frame 120. A portion of the inlet pipe 150 may be outside of the perimeter wall 171, and the other portion of the inlet pipe 150 may be within the internal space of the pack housing 100 surrounded by the perimeter wall 171.

The outlet pipe 160 may be coupled to the base plate 110, and may be configured to discharge cooling fluid to an external cooling fluid source. The outlet pipe 160 may have an outlet channel 161 communicating with the lower cooling channel 111 of the base plate 110. The outlet pipe 160 may be configured to convey cooling fluid discharged from the outlet of the lower cooling channel 111 to an external cooling fluid source. In exemplary embodiments, the outlet pipe 160 may be coupled to a portion of the base plate 110 on the outside of the perimeter wall 171.

In embodiments, the inlet channel 151 of the inlet pipe 150, the first side cooling channel 121 of the front end frame 120, the upper cooling channel 131 of the top plate 130, the second side cooling channel 141 of the rear end frame 140, the lower cooling channel 111 of the base plate 110, and the outlet channel 161 of the outlet pipe 160 may be in sequential communication. The inlet channel 151 of the inlet pipe 150, the first side cooling channel 121 of the front end frame 120, the upper cooling channel 131 of the top plate 130, the second side cooling channel 141 of the rear end frame 140, the lower cooling channel 111 of the base plate 110, and the outlet channel 161 of the outlet pipe 160 may constitute an integrated cooling channel connected in sequence.

The externally provided cooling fluid is supplied to the inlet channel 151 of the inlet pipe 150, and flows sequentially along the inlet channel 151 of the inlet pipe 150, the first side cooling channel 121 of the front end frame 120, the upper cooling channel 131 of the top plate 130, the second side cooling channel 141 of the rear end frame 140, the lower cooling channel 111 of the base plate 110, and the outlet channel 161 of the outlet pipe 160 in sequence, and may then be discharged to the outside through the outlet channel 161 of the outlet pipe 160. While the cooling fluid is flowing, cooling of the cell assembly 200 may occur.

The pack cover 191 may be disposed on the perimeter wall 171 of the pack housing 100. The pack cover 191 may have a flat plate shape extending in a first horizontal direction (e.g., X direction) and a second horizontal direction (e.g., Y direction). The pack cover 191 may be coupled to the perimeter wall 171 of the pack housing 100 to cover the cell assembly 200. For example, the pack cover 191 may be coupled to the perimeter wall 171 of the pack housing 100 by bolts.

In exemplary embodiments, the top plate 130 may include a venting gap 139 that vertically overlaps with the cell assembly 200. The top plate 130 may include a plurality of segments, and the plurality of segments of the top plate 130 may each extend in a first horizontal direction (e.g., X direction) from the front end frame 120 to the rear end frame 140. The plurality of segments of the top plate 130 may be spaced apart in a second horizontal direction (e.g., Y-direction) with a venting gap 139 interposed therebetween. The venting gap 139 of the top plate 130 may overlap with the center part of each of the stacked battery cells 210 in the first horizontal direction (e.g., the X direction). Since the top plate 130 has a venting gap 139, hot gases generated by the battery cells 210 can be vented upward through the venting gap 139 of the top plate 130 when a thermal event, such as thermal runaway, occurs.

The top plate 130 may be spaced apart from the pack cover 191 with a venting space 181 interposed therebetween. That is, the venting space 181 may refer to a space provided between the top plate 130 and the pack cover 191 such that the top plate 130 and the pack cover 191 are spaced apart in a vertical direction (e.g., the Z direction). The venting space 181 may be in communication with the venting gap 139 of the top plate 130. The venting space 181 and the venting gap 139 of the top plate 130 may be utilized as a venting passageway for venting hot gases generated in the battery cell 210. For example, during a thermal event, such as a thermal runaway, hot gases generated by the battery cells 210 may flow through the venting gap 139 and venting space 181 of the top plate 130 to a venting device (e.g., a relief valve and/or a rupture valve) mounted on the perimeter wall 171 of the pack housing 100, and may be discharged to the outside of the pack housing 100 through the venting device.

In exemplary embodiments, the individual battery cells 210 may include a center part vertically overlapping the venting gap 139 and a pair of outer part spaced apart in a second horizontal direction (e.g., Y direction) with the center part interposed therebetween. The pair of outer parts of the individual battery cells 210 may each include electrode leads 213. In this case, the top plate 130 may be disposed to be vertically overlapping with the pair of outer parts of the individual battery cells 210. Generally, more heat is generated by the individual battery cells 210 at the outer part of the battery cells 210 with electrode leads 213 than at the center part of the battery cells 210. In exemplary embodiments, the battery pack 10 may have a dual cooling structure by the top plate 130 and the base plate 110 such that the outer part of the battery cells 210, where the heat generation is relatively high, is cooled by the top plate 130 and the base plate 110, thereby effectively controlling the heat generation of the battery cells 210.

### (Second embodiment)

FIG. 5 is a cross-sectional view illustrating a portion of a battery pack 10 according to exemplary embodiments of the present disclosure. FIG. 6 is a cross-sectional view illustrating a portion of a battery pack 10 according to exemplary embodiments of the present disclosure.

Referring to FIGS. 1 through 6, the first side cooling channel 121 of the front end frame 120 may include a common channel 123 and a plurality of first vertical channels 125. The common channel 123 may be in communication with an inlet channel 151 of the inlet pipe 150. The plurality of first vertical channels 125 may each extend in a vertical direction (e.g., Z direction) from the common channel 123. The plurality of first vertical channels 125 may connect between the common channel 123 and the upper cooling channel 131. The plurality of first vertical channels 125 may each extend in a vertical direction (e.g., Z-direction) from a corresponding sub-upper channel 1311 of the plurality of sub-upper channels 1311 to the common channel 123. Cooling fluid introduced into the common channel 123 via the inlet channel 151 of the inlet pipe 150 may be separated into the plurality of first vertical channels 125 and then supplied into each of the plurality of sub-upper channels 1311.

The top plate 130 may include a first plug 133 inserted into the first side cooling channel 121 and having an internal channel 1331. In exemplary embodiments, the top plate 130 may include a plurality of first plugs 133 that is inserted into a plurality of first vertical channels 125. An internal channel 1331 of each first plug 133 may communicate with a corresponding sub-upper channel 1311 of the plurality of sub-upper channels 1311. Cooling fluid provided from the first vertical channel 125 may be supplied to the sub-upper channels 1311 through the internal channel 1331 of the first plug 133. Since the top plate 130 has a plurality of first plugs 133 inserted into the plurality of first vertical channels 125, the physical coupling between the top plate 130 and the front end frame 120 can be strengthened and the leakage of cooling fluid between the top plate 130 and the front end frame 120 can be prevented.

In exemplary embodiments, sealing members such as gaskets 183 and O-rings may be disposed between the top plate 130 and the front end frame 120 to prevent leakage of cooling fluid.

The second side cooling channel 141 of the rear end frame 140 may include a plurality of second vertical channels 1411 spaced apart from each other. The plurality of second vertical channels 1411 may each extend in a vertical direction (e.g., Z direction) from an upper surface of the rear end frame 140 in contact with the top plate 130 to a lower surface of the rear end frame 140 in contact with the base plate 110. A plurality of second vertical channels 1411 may extend in a vertical direction (e.g., in a Z direction) from a corresponding sub-upper channel 1311 of the plurality of sub-upper channels 1311 to a corresponding sub-lower channel 1111 of the plurality of sub-lower channels 1111.

The top plate 130 may include a second plug 135 inserted into the second side cooling channel 141 and having an internal channel 1351. In exemplary embodiments, the top plate 130 may include a plurality of second plugs 135 that are inserted into a plurality of second vertical channels 1411. An internal channel 1351 of each second plug 135 may be in communication with a corresponding sub-upper channel 1311 of the plurality of sub-upper channels. Cooling fluid provided from the sub-upper channels 1311 may be supplied to the second vertical channel 1411 through the internal channel 1351 of the second plug 135. Since the top plate 130 has a plurality of second plugs 135 that are inserted into the plurality of second vertical channels 1411, the physical coupling between the top plate 130 and the rear end frame 140 can be strengthened and the leakage of cooling fluid between the top plate 130 and the rear end frame 140 can be prevented.

In exemplary embodiments, sealing members such as gaskets 185 and O-rings may be disposed between the top plate 130 and the rear end frame 140 to prevent leakage of cooling fluid.

The rear end frame 140 may include a third plug 143 inserted into the lower cooling channel 111 and having an internal channel 1431. In exemplary embodiments, the rear end frame 140 may include a plurality of third plugs 143 that is inserted into a plurality of sub-lower channels 1111. An internal channel 1431 of each third plug 143 may be in communication with a corresponding second vertical channel 1411 of the plurality of second vertical channels 1111. Cooling fluid provided from the second vertical channel 1411 may be supplied to the sub-lower channel 1111 via the internal channel 1431 of the third plug 143. Since the rear end frame 140 has a plurality of third plugs 143 inserted into the plurality of sub-lower channels 1111, the physical coupling between the rear end frame 140 and the base plate 110 can be strengthened and leakage of cooling fluid between the rear end frame 140 and the base plate 110 can be prevented.

In exemplary embodiments, sealing members such as gaskets 187 and O-rings may be disposed between the rear end frame 140 and the base plate 110 to prevent leakage of cooling fluid.

In exemplary embodiments, some of the sub-lower channels 1111 of the plurality of sub-lower channels 1111 may not be directly connected to the second side cooling channel 141 of the rear end frame 140. In this case, cooling fluid provided from the second side cooling channel 141 of the rear end frame 140 may be supplied via the horizontal connecting channel 116 to the sub-lower channels 1111 that are not directly connected to the second side cooling channel 141 of the rear end frame 140.

According to the battery pack 10 according to exemplary embodiments of the present disclosure, the front end frame 120 with the first side cooling channel 121, the top plate 130 with the upper cooling channel 131, the rear end frame 140 with the second side cooling channel 141, and the base plate 110 with the lower cooling channel 111 can perform multi-sided cooling for the battery cells 210, thereby improving the cooling performance for the battery cells 210. Since the heating of the battery cells 210 can be effectively controlled, the safety of the battery pack 10 can be improved.

In the battery pack 10 according to exemplary embodiments of the present disclosure, the cooling fluid circulates within the battery pack 10 through separate cooling channels, which can reduce differences in the flow rate of the cooling fluid between regions, and can result in more uniform cooling for the battery cells 210.

In a typical battery pack, the base plate is coupled to a number of pipes through which cooling fluid flows in or out, making it vulnerable to external impact. However, in exemplary embodiments of the present disclosure, the cooling fluid is provided into the pack housing 100 via an inlet pipe 150 and then decoupled from the front end frame 120 within the pack housing 100, thereby dramatically reducing the number of pipes coupled to the base plate 110, thereby reducing damage to the battery pack 10 during external vibration and shock.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A battery pack comprising:
a base plate comprising a lower cooling channel;
a cell assembly disposed on the base plate, and comprising a plurality of battery cells;
a top plate disposed on the cell assembly, and having an upper cooling channel;
a front end frame coupled to the top plate, and having a first side cooling channel communicating with the upper cooling channel;
a rear end frame extending from the base plate to the top plate, and having a second side cooling channel communicating with the upper cooling channel and the lower cooling channel;
an inlet pipe coupled to the front end frame, and having an inlet channel communicating with the first side cooling channel and configured to deliver externally provided cooling fluid to the first side cooling channel; and
an outlet pipe coupled to the base plate, and having an outlet channel communicating with the lower cooling channel.

2. The battery pack of claim 1, wherein
the inlet channel, the first side cooling channel, the upper cooling channel, the second side cooling channel, the lower cooling channel, and the outlet channel are in sequential communication.

3. The battery pack of claim 1, wherein
the first side cooling channel comprises:
a common channel communicating with the inlet channel; and
a plurality of first vertical channels, wherein
the upper cooling channel comprises a plurality of sub-upper channels spaced apart from each other, and
each of the plurality of first vertical channels extends from a corresponding sub-upper channel among the plurality of sub-upper channels to the common channel.

4. The battery pack of claim 3, wherein
the second side cooling channel comprises a plurality of second vertical channels spaced apart from each other, and
each of the plurality of second vertical channels extends from a corresponding sub-upper channel among the plurality of sub-upper channels to the lower cooling channel.

5. The battery pack of claim 4, wherein
the lower cooling channel comprises a plurality of sub-lower channels spaced apart from each other, and
each of the plurality of second vertical channels extends from a corresponding sub-upper channel among the plurality of sub-upper channels to a corresponding sub-lower channel among the plurality of sub-lower channels.

6. The battery pack of claim 5, wherein
each of the plurality of sub-upper channels extends in a first direction,
each of the plurality of sub-lower channels extends in the first direction, and
the plurality of second vertical channels extend in a vertical direction.

7. The battery pack of claim 1, wherein
the top plate comprises a first plug inserted into the first side cooling channel and having an internal channel.

8. The battery pack of claim 1, wherein
the top plate comprises a second plug inserted into the second side cooling channel and having an internal channel.

9. The battery pack of claim 1, wherein
the rear end frame comprises a third plug inserted into the lower cooling channel and having an internal channel.

10. The battery pack of claim 1, wherein
the top plate comprises a plurality of segments spaced apart from each other with a venting gap interposed therebetween, and
the venting gap vertically overlaps with the cell assembly.

11. The battery pack of claim 10, wherein
the plurality of battery cells is stacked in a first direction,
each of the plurality of battery cells extends in a second direction perpendicular to the first direction, and
each of the plurality of battery cells comprises:
a center part vertically overlapping with the venting gap; and
a pair of outer parts vertically overlapping with the top plate, and spaced apart in the second direction with the center part interposed therebetween.

12. The battery pack of claim 10, further comprising:
a perimeter wall extending along a perimeter of the base plate and surrounding the cell assembly; and
a pack cover coupled onto the perimeter wall to cover the cell assembly and the top plate, wherein
the pack cover is spaced apart from the top plate with a venting space interposed therebetween.

13. The battery pack of claim 1, comprising:
a perimeter wall extending along a perimeter of the base plate, and surrounding the cell assembly; and
a pack cover coupled to the perimeter wall to cover the cell assembly and the top plate, wherein
the inlet pipe penetrates the perimeter wall.

14. The battery pack of claim 1, wherein
the upper cooling channel comprises a plurality of sub-upper channels spaced apart from each other,
the lower cooling channel comprises a plurality of sub-lower channels spaced apart from each other,
the first side cooling channel comprises a plurality of first vertical channels and a common channel communicating with the inlet channel, each of the plurality of first vertical channels connecting a corresponding sub-upper channel among the plurality of sub-upper channels to the common channel,
the second side cooling channel comprises a plurality of second vertical channels, each of the plurality of second vertical channels connecting a corresponding sub-upper channel among the plurality of sub-upper channels to a corresponding sub-lower channel among the plurality of sub-lower channels,
the top plate comprises a plurality of first plugs inserted into the plurality of first vertical channels and a plurality of second plugs inserted into the plurality of second vertical channels, and
the rear end frame comprises a plurality of third plugs inserted into the plurality of sub-lower channels.

15. The battery pack of claim 14, further comprising:
a perimeter wall extending along a perimeter of the base plate, and surrounding the cell assembly; and
a pack cover coupled onto the perimeter wall to cover the cell assembly and the top plate, and spaced apart from the top plate with a venting space interposed therebetween, wherein
the inlet pipe penetrates the perimeter wall,
the top plate comprises a plurality of segments spaced apart from each other with a venting gap interposed therebetween, and
the venting gap is in communication with the venting space.
